# EUROPEAN PATENT APPLICATION

(11) **EP 2 450 694 A1**
(43) Date of publication of application: **09.05.2012**
(21) Application number: 10793618.9
(22) Date of filing: 02.07.2010
(51) Int. Cl.: G01N 21/89

(54) **DEFECT INSPECTION APPARATUS FOR SEPARATED AND TRANSPARENT OR TRANSLUCENT ARTICLES WITH LOW RIGIDITY AND INSPECTION METHOD THEREOF**

(30) Priority: 02.07.2009 CN 200910151376
(71) Applicant: Saint-Gobain Glass France, 92400 Courbevoie (FR)
(72) Inventor: LIN, Xiaofeng, Shanghai 200245 (CN); SCHWEITZER, Jean-Philippe, Shanghai 200245 (CN); LI, Huifen, Shanghai 200245 (CN); DENG, Wenhua, Shanghai 200245 (CN); CHEN, Haifeng, Shanghai 200245 (CN); CHEN, Dazhi, Shanghai 200245 (CN)
(74) Representative: Neuviale, Bertrand
(86) International application number: PCT/CN2010/074901
(87) International publication number: WO 2011/000324

(57) **Abstract**

The present invention relates to an apparatus and a method for detecting a defect of a separated low rigidity transparent or translucent body, wherein an image acquiring device includes: a first conveyer and a second conveyer configured to convey a separated low rigidity transparent or translucent body; a transparent bridge disposed between a first conveyer and a second conveyer along a transport path of the separated low rigidity transparent or translucent body, the transparent bridge having a top surface; an illuminating unit disposed on one side of the transparent bridge and configured to project diffusive light onto the top surface of the transparent bridge by transmitting through the transparent bridge; and an image pickup unit disposed on the other side of the transparent bridge and configured to receive light projected from the illuminating unit and transmitting through the separated low rigidity transparent or translucent body to form an image when the separated low rigidity transparent or translucent body enters the top surface of the transparent bridge. With the apparatus and the method, it is possible to detect a defect of the separated low rigidity transparent or translucent body.

## Description

### Field of the Invention

The present invention relates to an apparatus and a method for detecting a defect of a separated low rigidity transparent or translucent body.

### Background Art

Defects of transparent or translucent products include local defects such as inclusions and voids and contaminants such as dusts and hairs. Such defects have sizes ranging from more than ten to thousands of micrometers.

In a handwork product line, a quality control operator inspects defects of products with his or her eyes. While in an automated product line, in view of production safety, manual quality detection and control is not allowed and there is no completely automatic detection apparatus. Therefore there is no quality control in the automated product line.

Many detection methods and devices have been developed for quality control in the automated product line. They are mainly intended for two kinds of applications. One is a separated high rigidity transparent or translucent body such as glass, and the other is a low rigidity transparent or translucent body such as plastic sheet and paper.

US patent application No. 2004/0179193A1 discloses a method and an apparatus for detecting a defect of a separated high rigidity transparent body.

In US 2004/0179193A1, a plurality of rollers form a moving means to move glass, which is the separated high rigidity transparent body. An illuminating means is disposed on one side of the glass as well as at a gap between two rollers of the plurality of rollers, and projects light on the glass. An imaging array (image pickup means) formed of a plurality of line sensor cameras is disposed on the opposite side of the glass and receives light projected from the illuminating means and transmitting through the glass, and generates a set of one dimensional images. An image processing means reconstructs a two dimensional image based on the set of one dimensional images and analyzes the two dimensional image for defects of the glass.

The method and apparatus disclosed in the above mentioned patent application are not applicable to a low rigidity transparent body, since it can not move on these rollers due to its low rigidity.

US patent application No. 2006/0203246A1 discloses a method and an apparatus for detecting a defect of a continuous low rigidity transparent body.

In US 2006/0203246A1, a pair of guide rollers are used as moving means to convey continuous low rigidity transparent film as the continuous low rigidity transparent body, wherein the continuous low rigidity transparent film is turned around the pair of guide rollers. A light source is disposed below the continuous low rigidity transparent film and projects linear light toward the transparent film. A light receiver is disposed on the other side of the transparent film opposite to the light source and receives light transmitting through the transparent film to generate images. A judgment means determines whether there is any defect in the transparent film based on the generated images.

The apparatus and method disclosed in US 2006/0203246A1 require the low rigidity transparent film to be continuous so that it can be turned and moved around the pair of guide rollers.

Therefore, the apparatus and method disclosed in US2006/0203246A1 are not applicable to the separated low rigidity transparent or translucent body.

### Summary

In view of the above problems with prior art, the present disclosure provides an apparatus and a method for detecting a defect of a separated low rigidity transparent or translucent body with which a defects in the separated low rigidity transparent or translucent body can be detected.

In one aspect of the present invention, there is provide an image acquiring device, comprising: a first conveyer and a second conveyer configured to convey a separated low rigidity transparent or translucent body; a transparent bridge disposed between the first conveyer and the second conveyer along a transport path of the separated low rigidity transparent or translucent body, the transparent bridge having a top surface; an illuminating unit disposed on one side of the transparent bridge and configured to project diffusive light onto the top surface of the transparent bridge by transmitting through the transparent bridge; and an image pickup unit disposed on the other side of the transparent bridge and configured to receive light projected from the illuminating unit and transmitting through the separated low rigidity transparent or translucent body to form an image when the separated low rigidity transparent or translucent body enters the top surface of the transparent bridge.

In another aspect of the present invention, there is provided a method for manufacturing an image acquiring device, comprising: disposing a transparent bridge between a first conveyer and a second conveyer along a transport path of a separated low rigidity transparent or translucent body, wherein the transparent bridge having a top surface; disposing an illuminating unit on one side of the transparent bridge, wherein the illuminating unit is configured to project diffusive light onto the top surface of the transparent bridge by transmitting through the transparent bridge; and disposing an image pickup unit on the other side of the transparent bridge, wherein the image pickup unit is configured to receive light projected from said illuminating unit and transmitting through the separated low rigidity transparent or translucent body to form an image when the separated low rigidity transparent or translucent body enters the top surface of the transparent bridge.

In yet another aspect of the present invention, there is provided an apparatus for detecting a defect of a separated low rigidity transparent or translucent body, comprising: a first conveyer and a second conveyer configured to convey a separated low rigidity transparent or translucent body; a transparent bridge disposed between the first conveyer and the second conveyer along a transport path of the separated low rigidity transparent or translucent body, the transparent bridge having a top surface; an illuminating unit disposed on one side of the transparent bridge and configured to project diffusive light onto the top surface of the transparent bridge by transmitting through the transparent bridge; an image pickup unit disposed on the other side of the transparent bridge and configured to receive light projected from the illuminating unit and transmitting through the separated low rigidity transparent or translucent body to form an image when the separated low rigidity transparent or translucent body enters the top surface of the transparent bridge; and an image processing unit configured to process the formed image to determine whether there is a defect in the separated low rigidity transparent or translucent body.

In yet another aspect of the present invention, there is provided an method for detecting a defect of a separated low rigidity transparent or translucent body, comprising: projecting diffusive light onto a top surface of a transparent bridge; receiving light transmitting through the separated low rigidity transparent or translucent body on the top surface of the transparent bridge to form an image; and processing the formed image to determine whether there is a defect in the separated low rigidity transparent or translucent body.

### Brief Description of Drawings

Other features and advantages of the present invention will become more apparent from the following detailed description with reference to the drawings, wherein:
Fig. 1 is a diagram showing an apparatus for detecting a defect of a separated low rigidity transparent or translucent body according to one embodiment of the present invention;
Figs. 2A and 2B illustrates examples of an conveyer according to one embodiment of the present invention; and
Figs. 3A and 3B illustrates examples of a binary image containing a area with gray scale different from that of the background of the binary image.

### Detail Description

Embodiments of the present invention will be described in detail below with reference to the drawings.

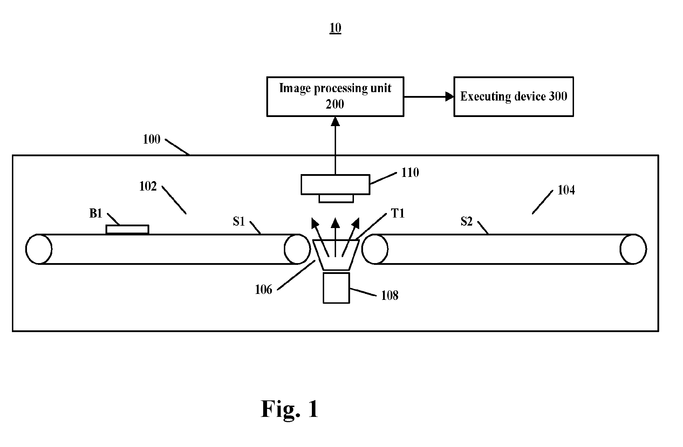

Fig. 1 is a diagram showing an apparatus for detecting a defect of a separated low rigidity transparent or translucent body according to one embodiment of the present invention.

As shown in Fig. 1, an apparatus 10 includes an image acquiring device 100, an image processing unit 200 and an executing device 300.

The image acquiring device 100 is configured to acquire images and includes two conveyers 102 and 104, a transparent bridge 106, an illuminating unit 108 and an image pickup unit 110.

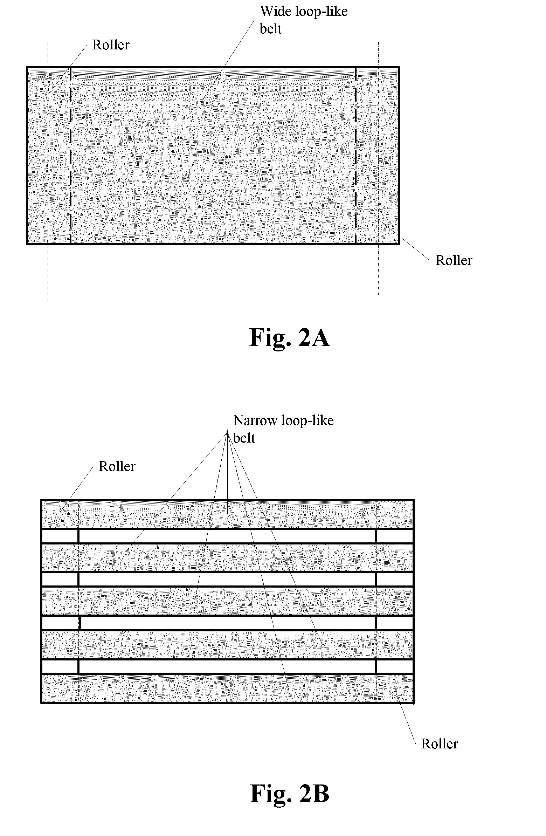

The conveyers 102 and 104 are configured to convey a separated plastic sheet B1 as an example of a separated low rigidity transparent/translucent body. The conveyers 102 and 104 are disposed at a predetermined interval along the transport path of the separated plastic sheet B1. In this embodiment, the conveyers 102 and 104 each includes two rollers and a loop-like belt, wherein the two rollers are disposed at a predetermined interval along the transport path of the separated plastic sheets B1, and rotate when being driven, and the loop-like belt turns around the two rollers and rotates along with rotation of the two rollers so as to convey the separated plastic sheet B1 along the transport path. The loop-like belt may be a wide loop-like belt or multiple narrow loop-like belts arranged at a predetermined interval, as shown in Figs. 2A and 2B.

The transparent bridge 106 is disposed between the conveyers 102 and 104. The transparent bridge 106 has a top surface T1 that allows the separated plastic sheet B1 move smoothly after it enter the top surface T1 of the transparent bridge 106, so that the image pickup unit 110 can obtain good image quality. The top surface T1 of the transparent bridge 106 is lower than top surfaces S1 and S2 of the conveyers 102 and 104 and the transparent bridge 106 is close to the conveyers 102 and 104 such that when the separated plastic sheet B1 are moved onto the transparent bridge 106 from the conveyer 102, it will not be trapped into the gap between the conveyer 102 and the transparent bridge 106, and when the separated plastic sheet B1 are moved out of the transparent bridge 106 to the conveyer 104, it will not collide with the lateral surface of the conveyer 104 to lose smooth movement or have some rotation. Preferably, the top surface T1 of the transparent bridge 106 is 1-3 millimeters lower than the top surfaces S1 and S2 of the conveyers 102 and 104, and the gap between the transparent bridge 106 and the conveyer 102 and the gap between the transparent bridge 106 and the conveyer 104 each has a width smaller than half of the thickness of the sheet B1. In this embodiment, the cross section of the transparent bridge 106 that is parallel with the transport path of the separated plastic sheet B1 and perpendicular to the top surface T1 of the transparent bridge 106 may be of reverse "trapezoid" 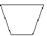 or rectangle shape, and the transparent bridge 106 may be made from transparent material such as PMMA (organic glass) or glass.

The illuminating unit 108 is disposed below (downside) the transparent bridge 106 and projects diffusive light onto the top surface T1 of the transparent bridge 106 by transmitting through the transparent bridge 106.

The image pickup unit 110 is disposed above (upside) the transparent bridge 106 for receiving light projected by the illuminating unit 108 and transmitting through the separated plastic sheet B1 to form an image. In this embodiment, the image pickup unit 110 may be an array of line sensor cameras.

The image processing unit 200 is configured to process images acquired by the image acquiring device 100 to determine whether there is a defect in the separated plastic sheet B1.

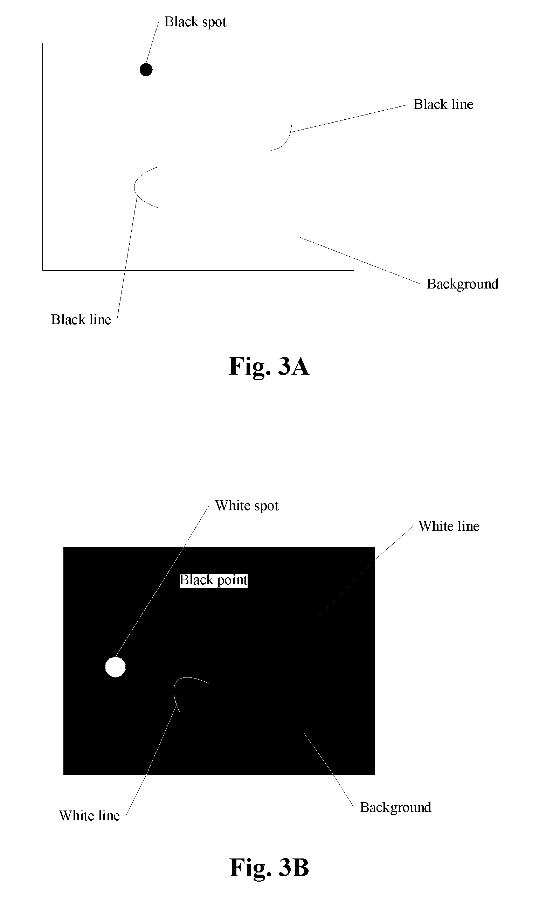

In this embodiment, the image processing unit 200 first subjects the image acquired by the image acquiring device 100 to auto-thresholding to obtain two different thresholds for binarizing the acquired image. Then, the image processing unit 200 uses each of the obtained two thresholds to binarize the acquired image to obtain two binary images. Next, the image processing unit 200 detects if any one of the two binary images contains an area with gray scale different from that of the background of the area of that binary image, wherein the area may be such as a black spot, a black line, a white spot or a white line as shown in Figs. 3A and 3B. Finally, if it is detected that at least one of the two binary images contains an area with gray scale different from that of the background thereof in that binary image, the image processing unit 200 determines that there is a defect in the separated plastic sheet B1, or if it is detected that any one of the two binary images contains no area with gray scale different from that of the background thereof in that binary image, the image processing unit 200 determines that there is no defect in the separated plastic sheet B1.

The executing device 300 is configured to dispose the separated plastic sheet B1 based on whether there is a defect in the sheet B1. The executing device 300 includes a judgment unit, a cleaning machine and a moving unit. The judgment unit is configured to, when the image processing unit 200 determines that there is a defect in the separated plastic sheet B1, judge whether the sheet B1 is detected for the first time by checking if the sheet B1 is from the cleaning machine, wherein when it is checked that the separated plastic sheet B1 is from the cleaning machine, it is determined that the separated plastic sheet B1 is not detected for the first time, and when it is checked the separated plastic sheet B1 is not from the cleaning machine, it is determined that the separated plastic sheet B1 is detected for the first time. The cleaning machine is configured to carry out cleaning operation. The moving unit is configured to, when the image processing unit 200 determines that there is no defect in the separated plastic sheet B1, move the separated plastic sheet B1 to the next step of the product line, when the judgment unit determines that the separated plastic sheet B1 is detected for the first time, move the separated plastic sheet B1 to the cleaning machine for cleaning, and when the judgment unit determines that the separated plastic sheet B1 is not detected for the first time, reject the separated plastic sheet B1.

An inclusions is the most common defect in the plastic sheet, however detection of it is likely to be disturbed by rough surface of the plastic sheet. Peaks and valleys on the rough surface of the plastic sheet may refract light, resulting in dark particles in the original image. The dark particles will be defect candidates and are likely to be confused with inclusions in the plastic sheet. However, adverse effect due to the rough surface of the plastic sheet is relaxed with the diffusive light in this embodiment.

Furthermore, with the diffusive light in this embodiment, defects with sizes smaller than the pixel resolution are scattered and result in magnified image, hence being able to be detected.

It can be seen that the apparatus of this embodiment can detect a defect in the separated plastic sheet that are invisible by naked eyes, the separated plastic sheet with high quality may be obtained with the apparatus of this embodiment, hence satisfying customer's requirement for high quality.

When the apparatus in the present embodiment detects no defect, the ratio of defects to the surface area of the separated plastic sheet B1 is generally less than 10⁻⁷ , and less than 10⁻⁸ in better case. Those skilled in the art should understand that the illustrated values of ratio of defects to surface area are not intended to limit and narrow down the scope of the present invention.

Those skilled in the art should appreciate that, while in the above embodiment, the transparent bridge 106 is configured such that the top surface T1 of the transparent bridge 106 is lower than the top surfaces S1 and S2 of the conveyers 102 and 104 and the transparent bridge 106 is close to the conveyers 102 and 104 such that when the separated plastic sheet B1 are moved onto the transparent bridge 106 from the conveyer 102, it will not be trapped into the gap between the conveyer 102 and the transparent bridge 106, and when the separated plastic sheet B1 are moved out of the transparent bridge 106 to the conveyer 104, it will not collide with the lateral surface of the conveyer 104 to lose smooth movement or have some rotation, the present invention is not limited to the use of the transparent bridge 106 configured such that the top surface T1 of the transparent bridge 106 is lower than the top surfaces S1 and S2 of the conveyers 102 and 104 and the transparent bridge 106 is close to the conveyers 102 and 104 for the above purpose. In some other embodiments of the present invention, other means may be applied for the above purpose.

For example, in some other embodiments of the present invention, the top surface T1 of the transparent bridge 106 is as high as the top surfaces S1 and S2 of the conveyers 102 and 104 and the transparent bridge 106 needs not to be close to the conveyers 102 and 104.In this case, when the separated plastic sheet B1 enters the transparent bridge 106 from the conveyer 102, the operator conveys the plastic sheet B1 from the conveyer 102 manually to the transparent bridge 106 and when the separated plastic sheet B1 enters the conveyer 104 from the transparent bridge 106, the operator conveys the separated plastic sheet B1 from the transparent bridge 106 manually to the conveyer 104.

As another example, in some other embodiments of the present invention, the top surface T1 of the transparent bridge 106 is as high as the top surfaces S1 and S2 of the conveyers 102 and 104 and the transparent bridge 106 needs not to be close to the conveyers 102 and 104, the apparatus 10 includes an ejecting means for ejecting air toward the gap between the conveyer 102 and the transparent bridge 106 and the gap between the conveyer 104 and the transparent bridge 106. Since the ejected air generates buoyant force carrying the separated plastic sheet B1, when the separated plastic sheet B1 enters the transparent bridge 106 from the conveyer 102, it will not be trapped into the gap between the conveyer 102 and the transparent bridge 106, and when it enters the conveyer 104 from the transparent bridge 106, it will not collide with the lateral surface of the conveyer 104 to lose smooth movement or have some rotation.

As further another example, in some other embodiments of the present invention, the top surface T1 of the transparent bridge 106 is as high as the top surfaces S1 and S2 of the conveyers 102 and 104 and the transparent bridge 106 needs not to be close to the conveyers 102 and 104, the apparatus 10 includes a first plate electrode and a second plate electrode plate electrode applied with high direct current voltage, which are disposed above the gap between the conveyer 102 and the transparent bridge 106 and the gap between the conveyer 104 and the transparent bridge 106 respectively. Since the first plate electrode and the second plate electrode are applied with high direct current voltage, when the separated plastic sheet B1 enter the transparent bridge 106 from the conveyer 102 and when it enters the conveyer 104 from the transparent bridge 106, a part of the sheet B1 at the gap between the conveyer 102 and the transparent bridge 106 will generate electrostatic force attracting each other with the first plate electrode, and a part of the sheet B1 at the gap between the conveyer 104 and the transparent bridge 106 will generate electrostatic force attracting each other with the second plate electrode, therefore when the separated plastic sheet B1 enters the transparent bridge 106 from the conveyer 102, it will not be trapped into the gap between the conveyer 102 and the transparent bridge 106, and when it enters the conveyer 104 from the transparent bridge 106, it will not collide with the lateral surface of the conveyer 104 to lose smooth movement or have some rotation.

Those skilled in the art should appreciate that, although in the above embodiments, the illuminating unit 108 is disposed below the transparent bridge 106 and the image pickup unit 110 is disposed above the transparent bridge 106, the present invention is not limited thereto. In some other embodiments of the present invention, it is also possible to dispose the illuminating unit 108 above the transparent bridge 106 and dispose the image pickup unit 110 below the transparent bridge 106. That is, in embodiments of the present invention, the illuminating unit 108 is disposed on one side of the transparent bridge 106 and the image pickup unit 110 is disposed on the other side of the transparent bridge 106.

Those skilled in the art should appreciate that although in the above embodiments, the image pickup unit is an array of line sensor cameras, the image pickup unit of the present invention is not limited thereto. In other embodiments of the present invention, the image pickup unit may also be a two dimensional camera.

Those skilled in the art should appreciate that although in the above embodiments, the separated plastic sheet B1 is taken as an example of the separated low rigidity transparent or translucent body, the separated low rigidity transparent or translucent body of the present invention is not limited to the separated plastic sheet B1.

Those skilled in the art should appreciate that the image processing unit described in the above embodiments may be implemented with software, hardware or combination of software and hardware.

Those skilled in the art should appreciate that various changes and modifications may be made to the above embodiments of the present invention without departing from the essential of the invention and these changes and modification should fall in the scope of the present invention. Therefore, the scope of the present invention is defined by the following claims.

## Claims

1. An image acquiring device comprising:
a first conveyer and a second conveyer configured to convey a separated low rigidity transparent or translucent body;
a transparent bridge disposed between the first conveyer and the second conveyer along a transport path of the separated low rigidity transparent or translucent body, the transparent bridge having a top surface;
an illuminating unit disposed on one side of the transparent bridge and configured to project diffusive light onto the top surface of the transparent bridge by transmitting through the transparent bridge; and
an image pickup unit disposed on the other side of the transparent bridge and configured to receive light projected from the illuminating unit and transmitting through the separated low rigidity transparent or translucent body to form an image when the separated low rigidity transparent or translucent body enters the top surface of the transparent bridge.

2. The image acquiring device of claim 1, wherein,
the top surface of the transparent bridge is lower than a top surface of the first conveyer and a top surface of the second conveyer, and the transparent bridge is close to the first conveyer and the second conveyer.

3. The image acquiring device of claim 1, further comprising:
an ejecting device configured to eject air toward a gap between the first conveyer and the transparent bridge and a gap between the second conveyer and the transparent bridge.

4. The image acquiring device of claim 1, further comprising:
a first plate electrode applied with high direct current voltage and disposed above a gap between the first conveyer and the transparent bridge; and
a second plate electrode applied with high direct current voltage and disposed above a gap between the second conveyer and the transparent bridge.

5. The image acquiring device of claim 1, wherein, the first conveyer and the second conveyer each further comprising:
a first roller and a second roller capable of rotating when being driven; and
a loop-like belt turning around the first roller and the second roller and rotating along with a rotation of the first roller and the second roller and configured to convey the separated low rigidity transparent or translucent body thereon.

6. The image acquiring device of claim 5, wherein, the loop-like belt is one wide loop-like belt or a plurality of narrow loop-like belts.

7. The image acquiring device of claim 2, wherein, the top surface of the transparent bridge is 1-3 millimeters lower than the top surface of the first conveyer and the top surface of the second conveyer.

8. The image acquiring device of claim 2, wherein, a gap between the transparent bridge and the first conveyer and a gap between the transparent bridge and the second conveyer are smaller than half of a thickness of the separated low rigidity transparent or translucent body.

9. The image acquiring device of claim 1, wherein, the separated low rigidity transparent or translucent body is a separated plastic sheet.

10. A method for manufacturing an image acquiring device, comprising:
disposing a transparent bridge between a first conveyer and a second conveyer along a transport path of a separated low rigidity transparent or translucent body, wherein the transparent bridge having a top surface;
disposing an illuminating unit on one side of the transparent bridge, wherein the illuminating unit is configured to project diffusive light onto the top surface of the transparent bridge by transmitting through the transparent bridge; and
disposing an image pickup unit on the other side of the transparent bridge, wherein the image pickup unit is configured to receive light projected from the illuminating unit and transmitting through the separated low rigidity transparent or translucent body to form an image when the separated low rigidity transparent or translucent body enters the top surface of the transparent bridge.

11. The method of claim 10, wherein
the top surface of the transparent bridge is lower than a top surface of the first conveyer and a top surface of the second conveyer, and the transparent bridge is close to the first conveyer and the second conveyer.

12. The method of claim 10, wherein the separated low rigidity transparent or translucent body is a separated plastic sheet.

13. An apparatus for detecting a defect of a separated low rigidity transparent or translucent body, comprising:
a first conveyer and a second conveyer configured to convey a separated low rigidity transparent or translucent body;
a transparent bridge disposed between the first conveyer and the second conveyer along a transport path of the separated low rigidity transparent or translucent body, the transparent bridge having a top surface;
an illuminating unit disposed on one side of the transparent bridge and configured to project diffusive light onto the top surface of the transparent bridge by transmitting through the transparent bridge;
an image pickup unit disposed on the other side of the transparent bridge and configured to receive light projected from the illuminating unit and transmitting through the separated low rigidity transparent or translucent body to form an image when the separated low rigidity transparent or translucent body enters the top surface of the transparent bridge; and
an image processing unit configured to process the formed image to determine whether there is a defect in the separated low rigidity transparent or translucent body.

14. The apparatus of claim 13, wherein
the top surface of the transparent bridge is lower than a top surface of the first conveyer and a top surface of the second conveyer, and the transparent bridge is close to the first conveyer and the second conveyer.

15. The apparatus of claim 13, wherein the image processing unit further comprises:
a threshold calculating module configured to subject the formed image to automatic thresholding to obtain thresholds for binarizing the formed image;
a binarizing module configured to binarize the formed image with the obtained thresholds to obtain a binary image;
a detecting module configured to detect whether the binary image contains an area with a gray scale different from that of a background of the binary image; and
a determining module configured to determine that there is a defect in the separated low rigidity transparent or translucent body when it is detected that the binary image contains an area with a gray scale different from that of the background of the binary image, and determine that there is no defect in the separated low rigidity transparent or translucent body when it is detected that the binary image contains no area with a gray scale different from that of the background of the binary image.

16. The apparatus of claim 13, further comprising:
an executing device configured to treat the separated low rigidity transparent or translucent body based on whether there is a defect in the separated low rigidity transparent or translucent body.

17. The apparatus of claim 16, wherein said executing device further comprising:
a judgment unit configured to judge whether the separated low rigidity transparent or translucent body is detected for the first time when it is determined that there is a defect in the separated low rigidity transparent or translucent body;
a cleaning machine configured to carry out cleaning operation; and
a moving unit configured to move the separated low rigidity transparent or translucent body to the cleaning machine for cleaning when the judgment unit determines that the separated low rigidity transparent or translucent body is detected for the first time, and reject the separated low rigidity transparent or translucent body when the judgment unit determines that the separated low rigidity transparent or translucent body is not detected for the first time.

18. The apparatus of claim 13, wherein the separated low rigidity transparent or translucent body is a separated plastic sheet.

19. The apparatus of any one of claims 13-18, wherein,
when the judgment unit determines the separated low rigidity transparent or translucent body contains no defect, a ratio of defects to a surface area of the separated low rigidity transparent or translucent body is less than 10⁻⁷_{.}

20. The apparatus of claim 19, wherein
when the judgment unit determines that the separated low rigidity transparent or translucent body contains no defect, the ratio of the defects to the surface area of the separated low rigidity transparent or translucent body is further less than 10⁻⁸.

21. An method for detecting a defect of a separated low rigidity transparent or translucent body, comprising:
projecting diffusive light onto a top surface of a transparent bridge;
receiving light transmitting through the separated low rigidity transparent or translucent body on the top surface of the transparent bridge to form an image; and
processing the formed image to determine whether there is a defect in the separated low rigidity transparent or translucent body.

22. The method of claim 21, wherein the step of processing the formed image further comprises:
subjecting the formed image to automatic thresholding to obtain thresholds for binarizing the formed image;
binarizing the formed image with the obtained thresholds to obtain a binary image;
detecting whether the binary image contains an area with a gray scale different from that of a background of the binary image; and
determining that there is a defect in the separated low rigidity transparent or translucent body when it is detected that the binary image contains an area with a gray scale different from that of a background of the binary image, and determining that there is no defect in the separated low rigidity transparent or translucent body when it is detected that the binary image contains no area with a gray scale different from that of the background of the binary image.

23. The method of claim 21, further comprising:
judging whether the separated low rigidity transparent or translucent body is detected for the first time when it is determined that there is a defect in the separated low rigidity transparent or translucent body;
moving the separated low rigidity transparent or translucent body to a cleaning machine for cleaning when it is determined that the separated low rigidity transparent or translucent body is detected for the first time; and
rejecting the separated low rigidity transparent or translucent body when it is determined that the separated low rigidity transparent or translucent body is not detected for the first time.

24. The method of claim 21, wherein the separated low rigidity transparent or translucent body is a separated plastic sheet.

25. The method of any one of claims 21-24, wherein,
when it is determined that there is no defect in the separated low rigidity transparent or translucent body, a ratio of defects to a surface area of the separated low rigidity transparent or translucent body is less than 10⁻⁷.

26. The method of claim 25, wherein
when it is determined that there is no defect in the separated low rigidity transparent or translucent body, the ratio of the defects to the surface area of the separated low rigidity transparent or translucent body is further less than 10⁻⁸.
